# EUROPEAN PATENT APPLICATION

(11) **EP 2 595 248 A1**
(43) Date of publication of application: **22.05.2013**
(21) Application number: 11425277.8
(22) Date of filing: 15.11.2011
(51) Int. Cl.: H01R 9/24, H01R 13/52, H01R 13/59, B29C 45/16, H01R 13/504

(54) **Waterproof connector**

(71) Applicant: TECHNO S.r.l., 22070 Guanzate (CO) (IT)
(72) Inventor: Galli, Sandro, Guanzate (CO) (IT)
(74) Representative: Simino, Massimo

(57) **Abstract**

An waterproof terminal for the electrical interconnection of electric conductors comprises a terminal board (5) with four poles housed in a containing body (2) and two cable glands (6,7) coupled with the opposite ends of said containing body (2). Advantageously, the seal of each cable gland (6,7) with a respective abutment surface (9,10) of the containing body (2) is ensured by the fact that on such an abutment surface (9,10) sealing means (15) are overmoulded.

## Description

The present invention refers to a terminal with a high degree of protection for the waterproof fixed linear electrical connection of electric conductors in accordance with the preamble of claim 1.

In electric cabling it is known to use terminal boards, for example of the type known as mammoth, should it be necessary to electrically interconnect the ends of different electric conductors to one another.

Specifically, there are multi-way terminal boards, for example three-way or four-way, should it be necessary to electrically interconnect, in an independent and selective manner, the head ends of a first plurality of electric conductors with the head ends of a second corresponding plurality of electric conductors, thus having two, three or more way terminal boards.

Generally, electric connectors are equipped with clamping means, for example using screws, suitable for engaging the head end of the electric conductors inserted in the electric connectors themselves ensuring that they do not come loose.

Concerning this, it should be noted how nowadays in addition to two-way terminals (for example suitable for connecting the live and neutral wires) and three-way terminals (for example suitable for connecting the live, the neutral and the earth wire) there is great demand for multi-way terminals, for example four-way or six-way, capable of interconnecting a greater number of pairs of electric conductors. Purely as an example, it should be noted how the use of a terminal with four poles can be required when in addition to the live, neutral and earth line there is a line for a control signal or, as a further example, should it be required to selectively and independently feed two different devices within the same apparatus.

In the case in which it is required to respect stringent technical insulation requirements, for example in terms of use in the presence of sprays, the aforementioned terminal boards lend themselves to being housed inside containment casings that perform the task of ensuring the necessary degree of protection and/or insulation.

Nowadays there is a great need to have multi-way terminal boards capable of ensuring the cabling operation between the head ends of the different electric connectors and that at the same time is waterproof, so as to allow safe use even in conditions that can be defined as "humid", "wet" or temporarily immersed in liquids.

Nowadays, terminal boards for use in humid or wet environments are housed in a containing body with the opposite ends of which two cable glands are coupled. It should be noted that the water-tightness is obtained thanks to the presence of O-rings and the like to be positioned between the coupled parts of the containing body and of the respective cable gland.

With reference to these embodiments, it should be noted that, although effective they are not without drawbacks including seal defects due to incorrect positioning of the seals in the seats during the mounting step or to possible dimensional errors of the seals or of the seats intended to house such seals.

Furthermore, it should be noted how over time a first operation of cabling and clamping the cable glands, the seals are deformed and no longer suitable for ensuring the initial seal.

The problem at the basis of the present invention is to devise a waterproof terminal for the electrical interconnection of electric conductors that has structural and functional characteristics such as to satisfy the aforementioned requirement, at the same time avoiding the aforementioned drawbacks with reference to the prior art.

Such a problem is solved by a waterproof terminal for the electrical interconnection of electric conductors according to claim 1.

Further characteristics and advantages of the waterproof terminal for the electrical interconnection of electric conductors according to the present invention will become clearer from the following description of a preferred example embodiment, given for indicating and not limiting purposes, with reference to the attached figures, in which:

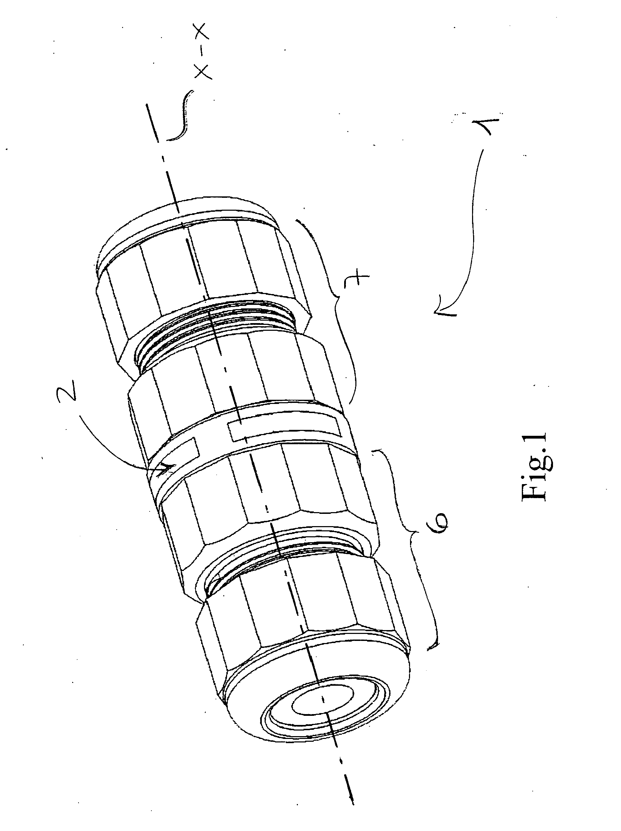

- figure 1 represents a perspective view of a terminal according to the invention in closed configuration;

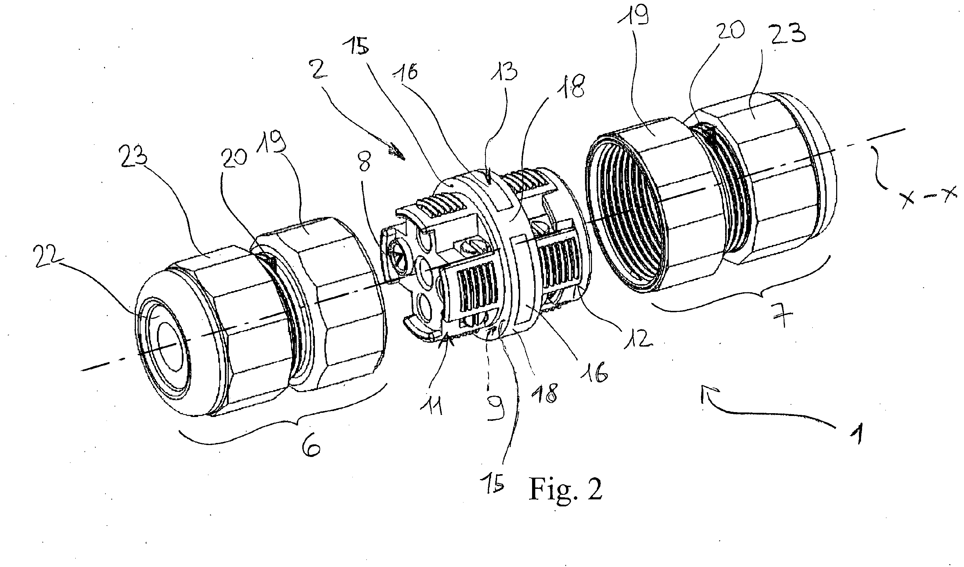

- figure 2 represents a perspective view of the terminal of figure 1 partially exploded;
- figure 3 represents the terminal of figure 1 in exploded configuration;

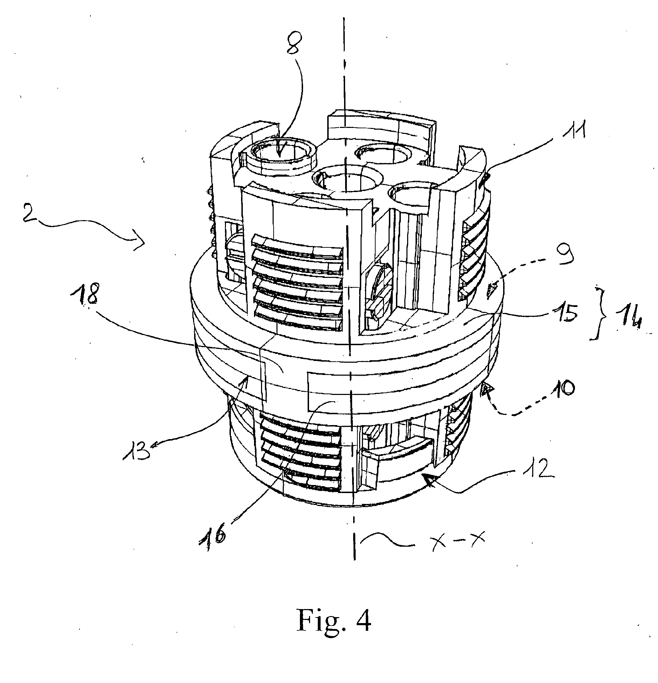

- figure 4 represents a perspective view of a component of the terminal of figure 1 and

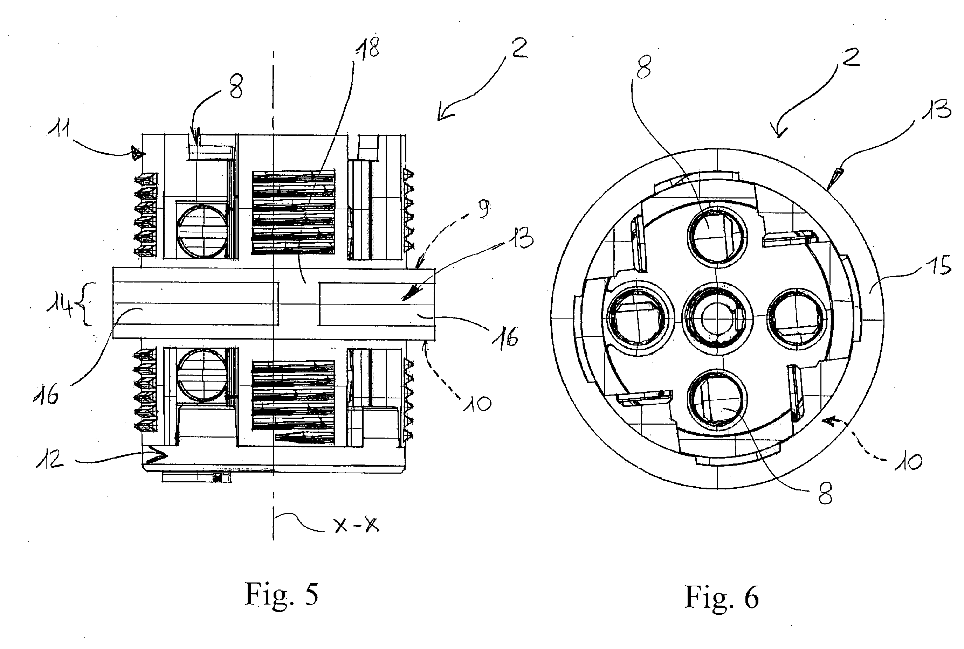

- figures 5 and 6 represent two plan views, side and front respectively, of the component of figure 1.

With reference to the attached figures, reference numeral 1 globally indicates a waterproof terminal for the electrical interconnection of electric conductors.

The terminal 1 comprises:
- a terminal board 5 comprising electric connectors 3 electrically insulated from one another and each equipped with clamping means 4 to engage and hold the head end of electric conductors;
- a containing body 2 that defines a housing in which the terminal board 5 is received in protected position,
- a first cable gland 6 and
- a second cable gland 7.

The containing body 2 extends in a longitudinal direction X-X between a first head end and a second head end. At such head ends the containing body 2 comprises through openings 8 through which it is possible to insert electric conductors (not illustrated) to be cabled to the terminal board.

The first cable gland 6 and the second cable gland 7 are respectively reversibly coupled closed with the first head end and with the second head end of the containing body 2.

This is obtained thanks to the fact that the containing body 2 comprises a first abutment surface 9 and a second abutment surface 10 extending transversally to the longitudinal direction X-X and, at the same time the first cable gland 6 and the second cable gland 7 respectively abut against such abutment surfaces 9 and 10 with interposition of sealing means 15, in this way ensuring the aforementioned sealed coupling between the containing body 2 and the cable glands 6,7.

Advantageously, the sealing means 15 are directly overmoulded on the first abutment surface 9 and on the second abutment surface 10 so as to be integrated and permanently connected with the containing body 2.

In accordance with the illustrated embodiment, in the containing body 2 it is possible to identify a central portion arranged between two end portions 11 and 12 respectively, at which the aforementioned first head end and, second head end of the containing body 2 are respectively located.

The central portion of the containing body 2 comprises an annular ridge 13 projecting outwards, more specifically according to a radial direction perpendicular to the longitudinal direction X-X, with respect to the end portions 11 and 12

Advantageously, the first abutment surface 9 and the second abutment surface 10 are defined by opposite surfaces of the aforementioned annular ridge 13 respectively facing towards the end portion 11 and towards the end portion 12.

In accordance with what has been described above in relation to the preferred embodiment, the first abutment surface 9 and the second abutment surface 10 therefore extend perpendicular to the longitudinal direction X-X along which the containing body 2 extends.

As can be seen from the figures:
- in the annular ridge 13 it is possible to identify a longitudinal connecting wall 14 between the opposite first abutment surface 9 and second abutment surface 10 and
- the sealing means 15 are overmoulded on the annular ridge 13 of the containing body 2 so as to extend from the first abutment surface 9 to the second abutment surface 10 and only partially cover the aforementioned longitudinal wall 14 of the annular ridge 13.

Preferably, the longitudinal wall 14 of the annular ridge 13 comprises an alternation between holding portions 16 without sealing means 15 and surface portions 18 overmoulded with the sealing means 15 that define connection bridges between the sealing means 15 that cover the first abutment surface 9 and the second abutment surface 10, respectively.

Preferably, the first cable gland 6 and the second cable gland 7 each have a threaded body 19 which is coupled in screw-mother screw engagement with a respective threading portion of a respective end portion 11 or 12 of the containing body 2.

It should be noted that the screwing of the threaded body 19 of a cable gland 6,7 with a threading portion of a respective end portion 11 or 12 of the containing body 2 is possible until the front end of such a threaded body 19 abuts against the sealing means 15 overmoulded on the respective abutment surface 9,10.

In accordance with the illustrated embodiment, the aforementioned threaded body 19 is in the form of a threaded bell, more specifically equipped with mother screw, having an axial through opening through which it is possible to pass an electric conductor (not illustrated).

Each cable gland 6,7 comprises a main body 20 that:
- is provided with an external threading,
- has an axial through hole suitable for receiving a portion of an electric conductor,
- at a first head end carries the aforementioned threaded body 19 and
- at the other head end is configured so as to define a plurality of elastically deformable fins 21 suitable for acting to clamp on a portion of electric conductor inserted in said through hole.

Each cable gland 6,7 also comprises:
- a toroidal sealing element 22 suitable for being sealably fitted on said portion of electric conductor (not represented in figure) and housed inside the deformable fins 21 so as to rest at the base thereof and
- a threaded nut 23, which is equipped with an axial through hole, is screwably engaged with the aforementioned external threading of the main body 20 and internally has a conical geometry with a section that reduces going away from the end facing towards the aforementioned threaded body 19.

As a consequence of the aforementioned conical geometry of the threaded nut 23, the screwing of the threaded nut 23 on the main body 20 of the respective cable gland 6,7 so as to make the threaded nut 23 move forward along the main body 20 of the cable gland 6,7 causes a deformation of the deformable fins 21 towards the inside of the threaded main body 20 of the cable gland itself.

This makes it possible to obtain an effective clamping action of the deformable fins 21 on the toroidal seal 22, so that the latter clamps on the electric conductor.

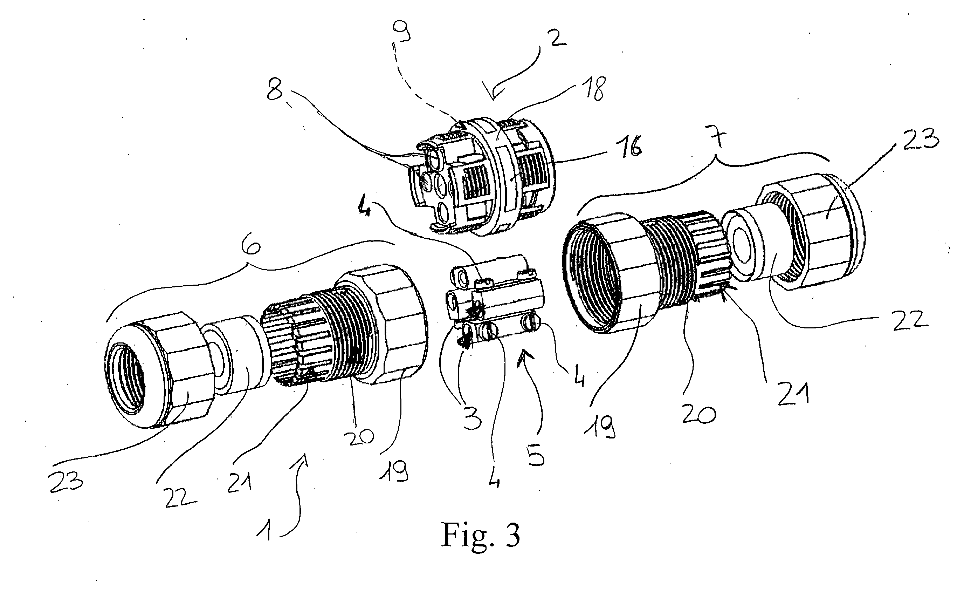

As can be seen from figure 3, the terminal board 5 comprises the aforementioned electric connectors 3 of electrically conductive material, for example brass or copper.

The figures illustrate the case of a four-way terminal board 5, in other words a terminal board equipped with four brass electric connectors 3 capable of interconnecting four different pairs of electric conductors to one another.

Each electric connector 3 is arranged to interface and make a firm and permanent connection with the ends of the pair of electric conductors to be connected. In accordance with the embodiment illustrated in the figures, this is obtained thanks to the fact that each connector 3:
- defines a rectilinear tubular element, of predetermined axis coinciding with the axis X-X of the containing body 2, comprising at least two openings each of which is suitable for allowing the insertion of a head end of an electric conductor and
- comprises the aforementioned clamping means 4 (in the example screws arranged perpendicular to the longitudinal direction X-X) suitable for engaging the head end of an electric conductor inserted in the electric connector to hold it in engagement.

The overmoulded sealing means 15 are preferably made with a rubber, a technopolymer (for example a TPE-V technopolymer) and the like.

As can be appreciated from what has been described, the waterproof terminal for the electrical interconnection of electric conductors according to the present invention makes it possible to satisfy the aforementioned requirements and at the same time to overcome the drawbacks referred to in the introductory part of the present description with reference to the prior art. Indeed, with the waterproof terminal according to the invention during cabling it is no longer necessary to take care of fitting and making sure of the correct positioning of rubber stoppers, seals and the like, since the sealing means 15 are directly overmoulded on the abutment surfaces against which the threaded body of the cable gland abuts, thus ensuring a perfect seal so long as the threaded body of the cable gland is taken to clamp in abutment against the abutment surface.

Another advantage of the waterproof terminal according to the invention is the uncommon structural simplicity thereof that as well as ensuring shorter cabling times makes it possible to achieve greater quality and functionality of the terminal itself, as well as a reduction in production costs.

Of course, a man skilled in the art, in order to satisfy contingent and specific requirements, can bring numerous modifications and variants to the waterproof terminal described above, all of which are in any case covered by the scope of protection of the invention as defined by the following claims.

## Claims

1. Waterproof terminal for the electrical interconnection of electric conductors, comprising:
- a terminal board comprising electric connectors (3) electrically insulated from one another and each equipped with clamping means (4) to engage and hold the head end of electric conductors;
- a containing body (2) extending according to a longitudinal direction (X-X) between a first head end and a second head end to define a housing in which said terminal board (5) is received in a protected position, wherein said first head end and said second head end comprise through openings (8) to allow access in said housing with electric conductors to be cabled to said terminal board (5) and
- a first cable gland (6) and a second cable gland (7) reversibly coupled closed with said first head end and, respectively, with said second head end of said containing body (2)
wherein said containing body (2) comprises a first abutment surface (9) and a second abutment surface (10) extending transversally to said longitudinal direction (X-X) and against which said first cable gland (6) and said second cable gland (7) abut with interposition of sealing means (15) to ensure a sealed coupling between said containing body (2) and said cable glands, **characterised in that** said sealing means (15) are directly overmoulded on said first abutment surface (9) and on said second abutment surface (10) so as to be integrated and connected in a permanent manner with said containing body (2).

2. Terminal according to claim 1, wherein:
- said containing body (2) comprises end portions (11,12) and a central portion,
- said central portion comprising an annular ridge (13) projecting transversally towards the outside of said containing body (2) with respect to said end portions (11,12),
said first abutment surface (9) and said second abutment surface (10) being defined by opposite surfaces of said annular ridge (13) facing towards a respective end portion.

3. Terminal according to claim 1 or 2, wherein said first abutment surface (9) and said second abutment surface (10) extend perpendicular to said longitudinal direction (X-X) along which said containing body (2) extends.

4. Terminal according to claim 2 or 3, wherein:
- said annular ridge (13) comprises a longitudinal connecting wall (14) between said opposite surfaces of said annular ridge (13) that define said first abutment surface (9) and said second abutment surface (10);
- said sealing means (15) are overmoulded on said annular ridge (13) of the containing body (2) so as to extend from said first abutment surface (9) to said second abutment surface (10) and partially cover said longitudinal wall of said annular ridge.

5. Terminal according to claim 4, wherein said longitudinal wall of said annular ridge (13) comprises an alternation between holding portions (16) without said sealing means (15) and surface portions (18) overmoulded with said sealing means (15) that define connection bridges between the overmoulded sealing means (15) of said opposite surfaces of said annular ridge (13).

6. Terminal according to any one of claims 2 to 5, wherein said first cable gland (6) and said second cable gland (7) each have a threaded body (19) coupled in screw-mother screw engagement with a respective threading portion of a respective one of said end portions of the containing body (2), the screwing of the threaded body (19) of a respective cable gland (6,7) with the threaded portions of a respective threading portion of a respective one of said end portions of the containing body (2) being permitted until said threaded body (19) is brought into abutment against the sealing means (15) overmoulded on the respective abutment surface (9, 10).

7. Terminal according to any one of claims 2 to 6, wherein each cable gland of said first cable gland (6) and second cable gland (7) comprises:
- a main body (20) provided with a through hole suitable for receiving a portion of an electric conductor and equipped with elastically deformable fins (21);
- a toroidal sealing element (22) suitable for being sealably fitted on said portion of electric conductor and
- a threaded nut (23) which is equipped with an axial through hole to allow the passage of said portion of electric conductor and is in screwing engagement with said main body (20) of the cable gland (6,7) to act on said deformable fins (21) so as to push them towards the inside of said main body (20) to clamp onto said toroidal sealing element (22) sealably fitted on said portion of electric conductor.

8. Terminal according to claim 7, wherein said threaded nut (23) on the inside has a conical geometry with a section that reduces going away from the end of the threaded nut (23) facing towards said main body (20), so that the screwing of the threaded nut (23) on the main body (20) so as to make the threaded nut 23 move forwards along said threaded body (19) determines a deformation of the deformable fins (21) towards the inside of the tubular body itself.
